# EUROPEAN PATENT SPECIFICATION

(11) **EP 4 611 357 B1**
(45) Date of publication and mention of the grant of the patent: **25.03.2026**
(21) Application number: 25160636.4
(22) Date of filing: 27.02.2025
(51) Int. Cl.: H04N 1/00

(54) **IMAGE READING DEVICE**
BILDLESEVORRICHTUNG
DISPOSITIF DE LECTURE D'IMAGE

(30) Priority: 01.03.2024 JP 2024031502
(43) Date of publication of application: 03.09.2025
(73) Proprietor: Seiko Epson Corporation, Tokyo 160-8801 (JP)
(72) Inventor: NAMIKI, Masaki, Suwa-shi, 392-8502 (JP)
(74) Representative: Lewis Silkin LLP

(56) References cited:
- US-A1- 2017 066 618
- US-A1- 2018 057 288
- US-B2- 11 254 532

## Description

The present application is based on, and claims priority from JP Application Serial Number 2024-031502, filed on March 1, 2024.

### BACKGROUND

### 1. Technical Field

The present disclosure relates to an image reading device.

### 2. Related Art

Various types of image reading devices have been used. Of these devices, there is an image reading device configured to read an image on a transported medium. For example, JP-A-2010-120742 discloses a feeding device configured to bend the medium upward toward a reading unit in the middle of the transport path of the medium to transport the medium.

In a case of the feeding device disclosed in JP-A-2010-120742, the medium deformed into a letter-V shape when viewed from the transport direction in the feeding unit is transported so as to be along the transport path bent upward. Thus, the deformation of the medium is corrected. In this manner, there is a case where the medium is deformed into the letter-V shape in the feeding unit when viewed from the transport direction, and then, is bent when viewed from a width direction intersecting the transport direction to flatten the medium having the letter-V shape, thereby making it flat in a region that is opposed to the reading unit. However, in a case of the typical image reading device that reads an image on the transported medium as in the feeding device disclosed in JP-A-2010-120742, even with such a configuration, it is still a challenge to optimize the posture of the transported medium. For example, in a case of the configuration in which the medium having a letter-V shape is excessively bent, there is a possibility that a medium having high stiffness such as thick paper cannot be appropriately transported. In addition, there is also a possibility that the medium deformed into the letter-V shape is not sufficiently made flat in the region that is opposed to the reading unit, resulting in a deterioration in the reading accuracy.

Patent document US11254532B2 discloses a medium transport apparatus for determining the occurrence of a paper feed jam, comprises medium mounting section which is used to mount a medium, and where the feed roller is used to feed the medium from the medium mounting section.

### SUMMARY

An image reading device according to the present disclosure configured to solve the problem described above includes a feeding unit including a feeding roller and a separation roller, and configured to transport a medium along a transport path in a transport direction, the separation roller being configured to nip, together with the feeding roller, the medium to separate the medium from each other, a first transport roller pair disposed downstream of the feeding unit in the transport direction, and configured to transport the medium in the transport direction while nipping the medium, a second transport roller pair disposed downstream of the first transport roller pair in the transport direction, and configured to transport the medium in the transport direction, and a reading unit disposed downstream of the second transport roller pair in the transport direction, and configured to read an image on the medium. The feeding unit is configured to transport the medium in the transport direction while nipping the medium with a nipping width narrower than a width of the medium in a width direction intersecting the transport direction, the first transport roller pair is configured to transport the medium in the transport direction while nipping the medium with a nipping width wider than the nipping width of the feeding unit in the width direction, and the second transport roller pair is configured to transport the medium in the transport direction with a nipping width wider than the nipping width of the first transport roller pair in the width direction using a plurality of roller pairs.

### BRIEF DESCRIPTION OF THE DRAWINGS

FIG. 1 is a side view illustrating an image reading device according to a first embodiment of the present disclosure.
FIG. 2 is an enlarged view illustrating a portion of the image reading device in FIG. 1, and is a side view illustrating a feeding unit, a first transport roller pair, a second transport roller pair, and their surroundings.
FIG. 3 is a perspective view illustrating a base unit of the image reading device illustrated in FIG. 1.
FIG. 4 is a perspective view illustrating an open-close unit of the image reading device in FIG. 1.
FIG. 5 is a schematic side view illustrating an image reading device according to a second embodiment of the present disclosure.
FIG. 6 is a schematic side view illustrating a feeding unit, a first transport roller pair, a second transport roller pair of the image reading device in FIG. 5, and their surroundings.
FIG. 7 is a back view of the second transport roller pair of the image reading device in FIG. 5 and its surrounding.

### DESCRIPTION OF EMBODIMENTS

First, the present disclosure will be schematically described.

An image reading device according to a first aspect of the present disclosure configured to solve the problem described above includes a feeding unit including a feeding roller and a separation roller and configured to transport a medium along a transport path in a transport direction, the separation roller being configured to nip, together with the feeding roller, the medium to separate the medium from each other, a first transport roller pair disposed downstream of the feeding unit in the transport direction, and configured to transport the medium in the transport direction while nipping the medium, a second transport roller pair disposed downstream of the first transport roller pair in the transport direction, and configured to transport the medium in the transport direction, and a reading unit disposed downstream of the second transport roller pair in the transport direction, and configured to read an image on the medium, in which the feeding unit transports the medium in the transport direction while nipping the medium with a nipping width narrower than a width of the medium in a width direction intersecting the transport direction, the first transport roller pair transports the medium in the transport direction while nipping the medium with a nipping width wider than the nipping width of the feeding unit in the width direction, and the second transport roller pair transports the medium in the transport direction with a nipping width wider than the nipping width of the first transport roller pair in the width direction using a plurality of roller pairs.

With the present aspect, the feeding unit transports the medium in the transport direction while nipping the medium with the nipping width narrower than the width of the medium in the width direction. This makes it possible to feed the medium in a state of having a letter-V shape and suppress feeding failure. In addition, the first transport roller pair transports the medium while nipping the medium with the nipping width wider than the nipping width of the feeding unit. In addition, the second transport roller pair transports the medium with the nipping width wider than the nipping width of the first transport roller pair using a plurality of roller pairs. With such a configuration, the medium in a state of having a letter-V shape can be favorably flattened before the medium reaches the reading unit. Thus, it is possible to optimize the posture of the transported medium.

An image reading device according to a second aspect of the present disclosure provides an aspect dependent on the first aspect, in which a nipping position at the feeding unit and a nipping position at the first transport roller pair are positioned in a horizontal direction, the first transport roller pair includes an upper-side roller and a lower-side roller disposed in an up-down direction so as to face each other, and a rotary shaft of the upper-side roller is disposed downstream of a rotary shaft of the lower-side roller in the transport direction.

With the present aspect, the first transport roller pair is configured such that the rotary shaft of the upper-side roller is disposed downstream of the rotary shaft of the lower-side roller in the transport direction. Such a configuration makes it possible to achieve a configuration in which the medium is bent at a favorable angle when viewed from the width direction, and the medium in a state of having a letter-V shape can be favorably flattened before the medium reaches the reading unit. In addition, the nipping position at the feeding unit and the nipping position at the first transport roller pair are positioned in a horizontal direction. In a case of a configuration in which the transport path faces the upper side at or around the feeding unit, the size of the device is more likely to increase in the height direction. However, with such a configuration, it is possible to suppress an increase in the size of the device in the height direction.

An image reading device according to a third aspect of the present disclosure provides an aspect dependent on the second aspect, in which the first transport roller pair is configured such that, when viewed from the width direction, a line coupling the rotary shaft of the upper-side roller and the rotary shaft of the lower-side roller forms an angle from 3° to 12° with respect to a line extending from the rotary shaft of the lower-side roller toward a vertically upward direction.

With the present aspect, when viewed from the width direction, a line coupling the rotary shaft of the upper-side roller and the rotary shaft of the lower-side roller forms an angle from 3° to 12° with respect to a line extending from the rotary shaft of the lower-side roller toward a vertically upward direction. With such a configuration, the medium in a state of having a letter-V shape can be favorably flattened before the medium reaches the reading unit, and at the same time, it is possible to suppress the feeding failure.

An image reading device according to a fourth aspect of the present disclosure provides an aspect dependent on any one of the first to third aspects, in which the nipping position at the feeding unit is positioned higher than the nipping position at the first transport roller pair.

With the present aspect, the nipping position at the feeding unit is positioned higher than the nipping position at the first transport roller pair. Such a configuration makes it possible to favorably flatten the medium in a state of having a letter-V shape before the medium reaches the reading unit, and also makes it possible to avoid a configuration in which the transport path faces the upper side at or around the feeding unit, which makes it possible to suppress an increase in the size of the device in the height direction.

An image reading device according to a fifth aspect of the present disclosure provides an aspect dependent on the fourth aspect, in which a line coupling a nipping position at the feeding unit and a nipping position at the first transport roller pair forms an angle from 2° to 15° with respect to a horizontal line.

The present aspect is configured such that the line coupling the nipping position at the feeding unit and the nipping position at the first transport roller pair forms an angle from 2° to 15° with respect to the horizontal line. With such a configuration, the medium in a state of having a letter-V shape can be favorably flattened before the medium reaches the reading unit while the feeding failure is being suppressed. In particular, it is possible to favorably transport a medium having high stiffness such as thick paper.

An image reading device according to a sixth aspect of the present disclosure provides an aspect dependent on any one of the first to fifth aspects, in which a nipping width of the second transport roller pair is wider than the width of the medium in the width direction.

With the present aspect, the nipping width of the second transport roller pair is wider than the width of the medium in the width direction. With such a configuration, the medium in a state of having a letter-V shape can be favorably flattened over the entire width direction of the medium before the medium reaches the reading unit.

The image reading device according to a seventh aspect of the present disclosure provides an aspect dependent on the sixth aspect, in which the second transport roller pair at least nips a central portion of and both ends of the medium in the width direction.

With the present aspect, the second transport roller pair at least nips a central portion of and both ends of the medium in the width direction. With such a configuration, the configuration of the second transport roller pair is simplified, and furthermore, the medium in a state of having a letter-V shape can be favorably flattened over the entire width direction of the medium before the medium reaches the reading unit.

The image reading device according to an eighth aspect of the present disclosure provides an aspect dependent on any one of the first to seventh aspects, in which the reading unit includes a first reading unit configured to read an image on a first surface of the medium, and a second reading unit disposed so as to face the first reading unit, and configured to read an image on a second surface of the medium that is at an opposite side from the first surface.

With the present aspect, the reading unit includes the first reading unit configured to read an image on the first surface of the medium, and also includes the second reading unit disposed so as to face the first reading unit, and configured to read an image on the second surface of the medium. In such a configuration, it is possible to shorten the length in the transport direction that needs to dispose the first reading unit and also to dispose the second reading unit. This makes it possible to suppress an increase in the size of the device in the depth direction.

### First Embodiment

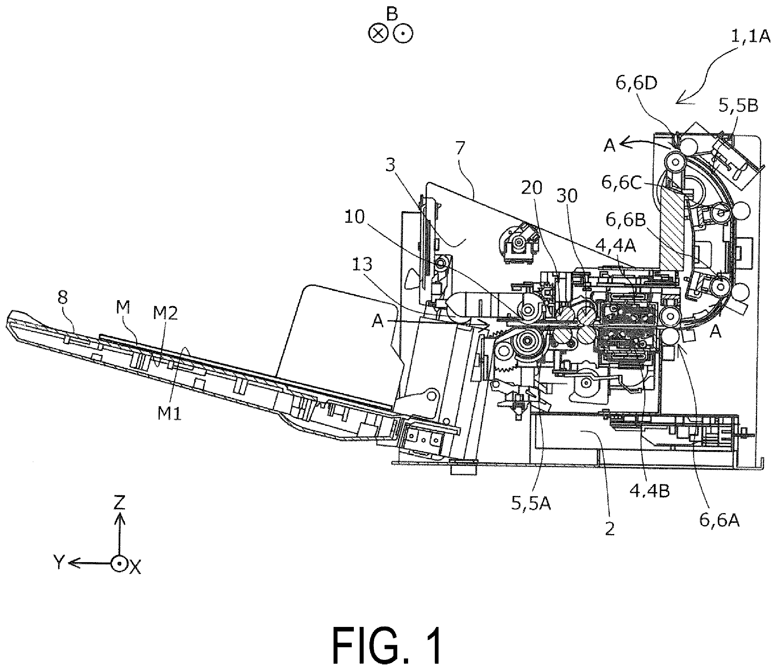

Below, embodiment of an image reading device 1 according to the present disclosure will be described. First, of the image reading device 1 according to the present disclosure, an image reading device 1A according to the first embodiment will be described with reference to FIGS. 1 to 4. In the following description, three axes that are orthogonal to each other are referred to as an X-axis, a Y-axis, and a Z-axis, respectively, as illustrated in each of the drawings. Directions indicated by the arrows of the three axes (X, Y, and Z) are the +direction of each of the directions, and opposite directions are the -direction. The Z-axis direction corresponds to a vertical direction, that is, a direction in which the gravity acts. In addition, the +Z direction indicates a vertically upward direction, and the -Z direction indicates a vertically downward direction. The X-axis direction and the Y-axis direction correspond to the horizontal direction, and of these directions, the X-axis direction corresponds to a width direction B. The +Y direction indicates a forward direction of the device, and the -Y direction indicates a rearward direction of the device. The +X direction indicates a rightward direction of the device, and the -X direction indicates a leftward direction of the device.

The image reading device 1A according to the present embodiment is a scanner configured to be able to read an image on the medium M serving as an original document. Here, the image described above means an item visually recorded on the medium, and includes, for example, a letter, a graphic, a table, a drawing, a photograph, and the like. The medium M is not limited to a sheet, and also includes a card, a booklet, and the like. The image reading device 1 is not limited to a scanner, and may be a copying machine, a facsimile device, and the like.

As illustrated in FIG. 1, the image reading device 1A according to the present embodiment includes a first reading unit 4A and a second reading unit 4B serving as a reading unit 4 configured to read an image on the medium M. The first reading unit 4A and the second reading unit 4B are provided in a transport path 5 so as to face the medium M. The first reading unit 4A is able to read an image on a first surface M1 of the medium M. The second reading unit 4B is able to read an image on a second surface M2 of the medium M. The first reading unit 4A and the second reading unit 4B include a contact image sensor (CIS)-type sensor or a charge coupled device (CCD)-type sensor or the like.

The image reading device 1A according to the present embodiment includes a first transport roller pair 20 provided upstream of the reading unit 4 in a transport direction A and configured to transport the medium M along the transport path 5 in the transport direction A, and also includes a second transport roller pair 30 provided downstream of the first transport roller pair 20 and upstream of the reading unit 4 in the transport direction A. In addition, the image reading device 1A includes a plurality of transport roller pairs 6 provided downstream of the reading unit 4 in the transport direction A, specifically, includes a transport roller pair 6A, a transport roller pair 6B, a transport roller pair 6C, and a transport roller pair 6D.

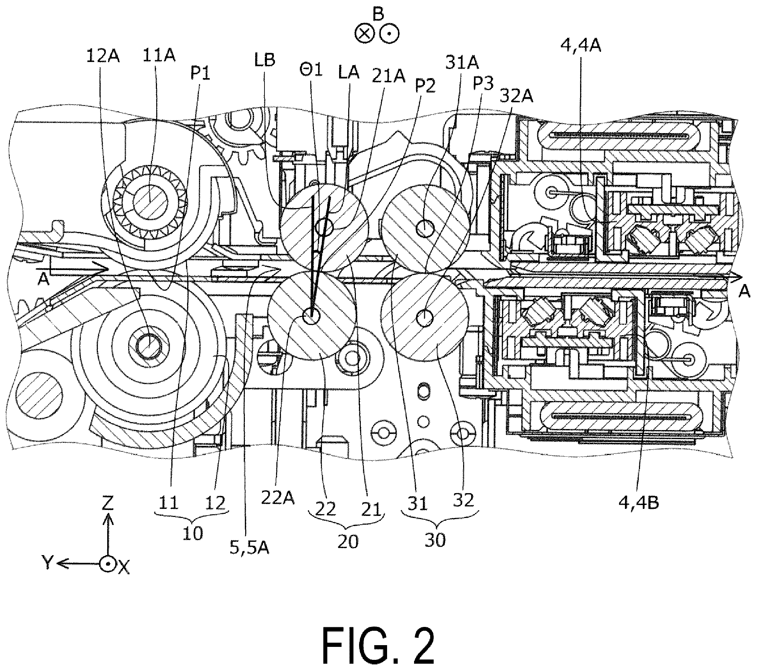

A feeding unit 10 is provided upstream of the first transport roller pair 20 in the transport direction A. As illustrated in FIG. 2, the feeding unit 10 is a roller pair including a feeding roller 11 configured to rotate with a rotary shaft 11A being the reference, and also including a separation roller 12 configured to rotate with a rotary shaft 12A being the reference. The feeding roller 11 is a driving roller configured to rotate with power of a driving unit (motor, for example) that is not illustrated in the drawing, and is configured to transport the medium M toward the transport direction A. The separation roller 12 is a driving roller configured to rotate with power of a driving unit (motor, for example) that is not illustrated in the drawing, and is a roller configured to separate one sheet of medium M from a plurality of media M.

Here, the separation roller 12 rotates in a direction in which the medium M is transported upstream in the transport direction A. The separation roller 12 includes a torque limiter (not illustrated). When a torque exceeding a set value acts on the torque limiter, the separation roller 12 rotates in a following manner in a direction in which the medium M is transported downstream in the transport direction A. A pick roller 13 is disposed upstream of the separation roller 12. The pick roller 13 is a driving roller configured to rotate with power of a driving unit (motor, for example) that is not illustrated in the drawing, and is configured to feed the medium M toward the transport direction A.

The first transport roller pair 20 and the second transport roller pair 30 include a driving roller configured to rotate with power of a driving unit (motor, for example) that is not illustrated in the drawing. In addition, the transport roller pair 6A, the transport roller pair 6B, the transport roller pair 6C, and the transport roller pair 6D each configured to transport the medium M in the transport direction A include driving rollers configured to rotate with power of a driving unit (motor, for example) that is not illustrated in the drawing. A lower-side roller 22 of the first transport roller pair 20 and a lower-side roller 32 of the second transport roller pair 30 are driving rollers. Note that both the upper-side roller 21 and the lower-side roller 22 of the first transport roller pair 20 may be a driving roller. In addition, both the upper-side roller 31 and the lower-side roller 32 of the second transport roller pair 30 may be a driving roller.

As illustrated in FIG. 1, a straight path 5A having a substantially straight shape and serving as the transport path 5 is provided from the feeding roller 11 to the transport roller pair 6A, and a curved inversion path 5B serving as the transport path 5 is provided downstream of the straight path 5A in the transport direction A, that is, downstream of the transport roller pair 6A in the transport direction A. The transport roller pair 6B, the transport roller pair 6C, and the transport roller pair 6D are provided in the curved inversion path 5B. A discharge receiving unit 7 configured to receive the medium M discharged from the curved inversion path 5B is disposed above the straight path 5A, which leads to a reduction in the size of the device.

As illustrated in FIG. 1, the medium M serving as an original document from which an image is read is placed at a medium placement unit 8. The medium M on the medium placement unit 8 is transported through the transport path 5, and is finally discharged to the discharge receiving unit 7. The medium placement unit 8 is configured so as to move up and down. When the medium M placed on the medium placement unit 8 is sent in the transport direction A, power is first transmitted from a drive source (not illustrated) to move the medium placement unit 8 upward, and the uppermost medium M of placed media M is stopped in a state of being in contact with the pick roller 13. As the pick roller 13 rotates in this state, the medium M is sent in the transport direction A, and the leading end of the medium M in the transport direction A reaches the nipping position of the roller pair of the feeding roller 11 and the separation roller 12.

A plurality of media M can be placed on the medium placement unit 8 in a stacked manner. However, in a case of multiple-feed in which a plurality of media M are sent when the media M are stacked, the media are separated into a single sheet by the separation roller 12. In addition, this single sheet is transported by the first transport roller pair 20 and the second transport roller pair 30 in the transport direction A, and an image on the medium M is read at the reading unit 4. The medium M for which an image is read by the reading unit 4 is sent by the transport roller pair 6A to the curved inversion path 5B to be transported by the transport roller pair 6A, the transport roller pair 6B, the transport roller pair 6C, and the transport roller pair 6D, and is discharged to the discharge receiving unit 7 by the transport roller pair 6D that also functions as a discharging unit.

As illustrated in FIG. 1, the image reading device 1A includes a base unit 2 and an open-close unit 3. The open-close unit 3 is configured to rotate in the up-down direction by an open-close mechanism (not illustrated) relative to the base unit 2, thereby being able to open and close. The base unit 2 includes the second reading unit 4B, the separation roller 12, the lower-side roller 22 of the first transport roller pair 20, the lower-side roller 32 of the second transport roller pair 30, and the driving rollers including the transport roller pair 6A, the transport roller pair 6B, the transport roller pair 6C, and the transport roller pair 6D.

The open-close unit 3 includes the first reading unit 4A, the pick roller 13, the feeding roller 11, the upper-side roller 21 of the first transport roller pair 20, the upper-side roller 31 of the second transport roller pair 30, and the driven rollers including the transport roller pair 6A, the transport roller pair 6B, the transport roller pair 6C, and the transport roller pair 6D. In addition, in a state where the open-close unit 3 is closed relative to the base unit 2, the feeding roller 11 and the separation roller 12 are opposed to each other, the upper-side roller 21 and the lower-side roller 22 are opposed to each other, the upper-side roller 31 and the lower-side roller 32 are opposed to each other, the driving rollers of the transport roller pair 6A, the transport roller pair 6B, the transport roller pair 6C, and the transport roller pair 6D and the corresponding driven rollers of the transport roller pair 6A, the transport roller pair 6B, the transport roller pair 6C, and the transport roller pair 6D are opposed to each other, as illustrated in FIG. 1.

In addition, in a state where the open-close unit 3 is opened relative to the base unit 2, the feeding roller 11 and the separation roller 12, the upper-side roller 21 and the lower-side roller 22, the upper-side roller 31 and the lower-side roller 32, and the driving rollers of the transport roller pair 6A, the transport roller pair 6B, the transport roller pair 6C, and the transport roller pair 6D and the corresponding driven rollers of the transport roller pair 6A, the transport roller pair 6B, the transport roller pair 6C, and the transport roller pair 6D are configured so as to be in a state of not being opposed to each other, although illustration is not given. That is, the base unit 2 and the open-close unit 3 are in a state where their opposing surfaces are exposed. This enables a user to access the transport path 5 that corresponds to the opposing surfaces.

Next, detailed description will be made of the feeding unit 10, the first transport roller pair 20, and the second transport roller pair 30 that are the main components of the image reading device 1A according to the present embodiment. As described above, the image reading device 1A according to the present embodiment includes the feeding unit 10 including the feeding roller 11 and the separation roller 12 configured to nip the medium M with the roller 11 to separate the medium M. In addition, the feeding unit 10 is configured to transport the medium M along the transport path 5 in the transport direction A. Furthermore, the image reading device 1A includes the first transport roller pair 20 disposed downstream of the feeding unit 10 in the transport direction A, and configured to transport the medium M in the transport direction A while nipping the medium. In addition, the image reading device 1A includes the second transport roller pair 30 disposed downstream of the first transport roller pair 20 in the transport direction A, and configured to transport the medium M in the transport direction A. Furthermore, the image reading device 1A includes the reading unit 4 disposed downstream of the second transport roller pair 30 in the transport direction A, and configured to read an image on the medium M.

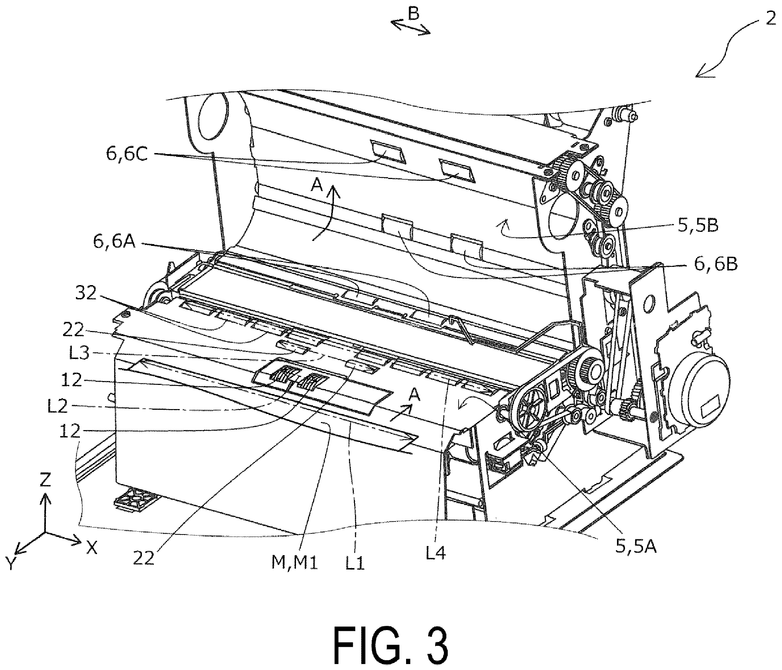

Here, as illustrated in FIG. 3, the feeding unit 10 transports the medium M in the transport direction A while nipping the medium with a nipping width L2 narrower than a width L1 of the medium M in the width direction B intersecting the transport direction A. This makes it possible to feed the medium M in a state of having a letter-V shape when viewed from the transport direction A, also makes it possible to efficiently impart the feeding force to the medium M, and also makes it possible to suppress the feeding failure.

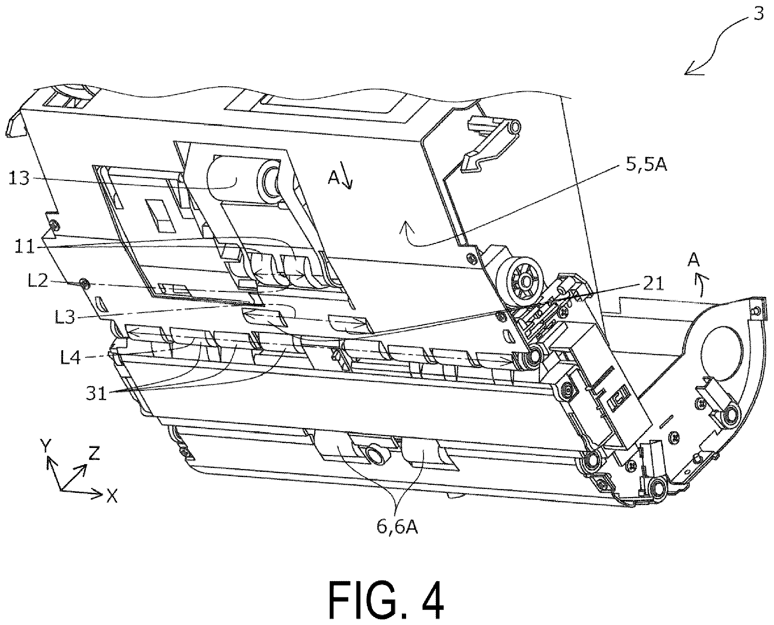

In addition, as illustrated in FIGS. 3 and 4, the first transport roller pair 20 transports the medium M in the transport direction A while nipping the medium with a nipping width L3 wider than the nipping width L2 of the feeding unit 10 in the width direction B. Furthermore, the second transport roller pair 30 transports the medium M in the transport direction A with a nipping width L4 wider than the nipping width L3 of the first transport roller pair 20 in the width direction B using a plurality of roller pairs arranged in the width direction B. With such a configuration, the medium M in a state of having a letter-V shape can be favorably flattened before the medium reaches the reading unit 4. Thus, the image reading device 1A according to the present embodiment is able to optimize the posture of the transported medium M.

In addition, the image reading device 1A according to the embodiment is configured such that the nipping width L4 of the second transport roller pair 30 is wider than the width L1 of the medium M in the width direction B. With such a configuration, the medium M in a state of having a letter-V shape can be favorably flattened over the entire width direction B before the medium reaches the reading unit 4.

Note that, in the image reading device 1A according to the present embodiment, the second transport roller pair 30 at least nips a central portion of and both ends of the medium in the width direction B, and such a configuration is favorable. This is because, with such a configuration, it is not necessary to use a roller that has a long length over the entire width direction and needs to be manufactured with high precision, and it is possible to simplify the configuration of the second transport roller pair 30. In addition, the medium M in a state of having a letter-V shape can be favorably flattened over the entire width direction B before the medium reaches the reading unit 4.

Furthermore, as illustrated in FIG. 2, the image reading device 1A according to the present embodiment is configured such that a nipping position P1 at the feeding unit 10 and a nipping position P2 at the first transport roller pair 20 are disposed in a horizontal direction. In a case of a configuration in which the transport path 5 faces the upper side at or around the feeding unit 10, the size of the device is more likely to increase in the height direction. However, since the image reading device 1A according to the present embodiment includes such a configuration, it is possible to suppress an increase in the size of the device in the height direction. Note that there may be a case where the position where the image reading device 1 is installed is not the horizontal direction in a strict sense. Thus, the "horizontal direction" as used herein is only necessary to be a substantially horizontal direction, and includes a case where the position is slightly deviated from the horizontal direction in a strict sense.

In addition, as illustrated in FIG. 2, the first transport roller pair 20 includes the upper-side roller 21 and the lower-side roller 22 disposed in an up-down direction so as to face each other, and a rotary shaft 21A of the upper-side roller 21 is disposed downstream of a rotary shaft 22A of the lower-side roller 22 in the transport direction A. Since the image reading device 1A according to the present embodiment has such a configuration, it is possible to achieve a configuration in which the medium M is bent at a favorable angle when viewed from the width direction B, and the medium M in a state of having a letter-V shape can be favorably flattened before the medium reaches the reading unit 4.

Specifically, in the image reading device 1A according to the present embodiment, the first transport roller pair 20 is configured such that, when viewed from the width direction B, a line LA coupling the rotary shaft 21A of the upper-side roller 21 and the rotary shaft 22A of the lower-side roller 22 forms an angle Θ1 from 3° to 12° with respect to a line LB extending from the rotary shaft 22A of the lower-side roller 22 toward a vertically upward direction, as illustrated in FIG. 2. Since the image reading device 1A according to the present embodiment has such a configuration, the medium M in a state of having a letter-V shape can be favorably flattened before the medium reaches the reading unit 4, and at the same time, it is possible to suppress the feeding failure.

Note that, as illustrated in FIG. 2, the second transport roller pair 30 includes the upper-side roller 31 and the lower-side roller 32 disposed in an up-down direction so as to face each other, and a rotary shaft 31A of the upper-side roller 31 and a rotary shaft 32A of the lower-side roller 32 are disposed at the same position in the transport direction A. In addition, a nipping position P3 at the upper-side roller 31 and the lower-side roller 32 of the second transport roller pair 30 is disposed at a horizontal position relative to a nipping position P2 at the upper-side roller 21 and the lower-side roller 22 of the first transport roller pair 20. With such a configuration, the straight path 5A is horizontal, which suppresses an increase in the size of the device in the height direction.

Furthermore, as described above, in the image reading device 1A according to the present embodiment, the reading unit 4 includes the first reading unit 4A configured to read an image on the first surface M1 of the medium M, and the second reading unit 4B disposed so as to face the first reading unit 4A and configured to read an image on the second surface M2 of the medium M that is at an opposite side from the first surface M1. Since the image reading device 1A according to the present embodiment has such a configuration, it is possible to shorten the length in the Y-axis direction that needs to dispose the first reading unit 4A and also to dispose the second reading unit 4B in the transport direction A. This makes it possible to suppress an increase in the size of the device in the depth direction.

### Second Embodiment

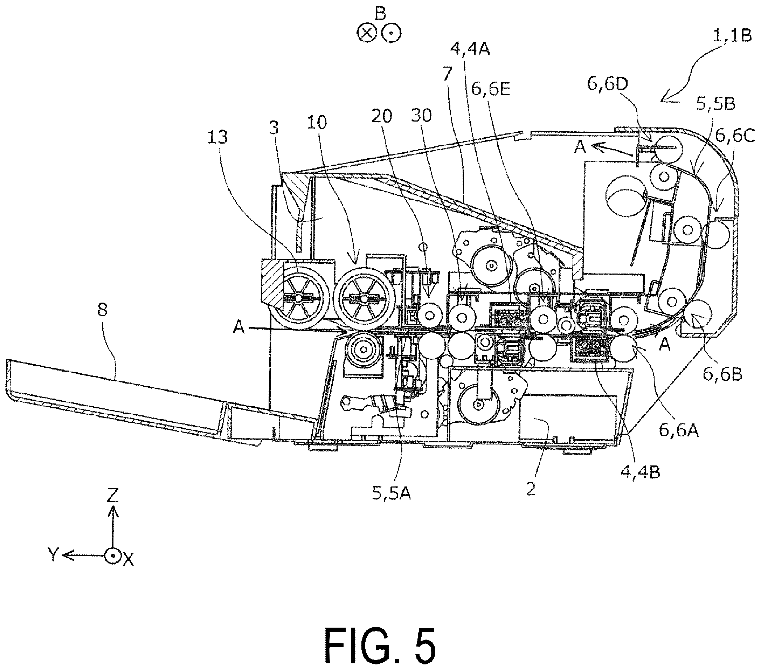

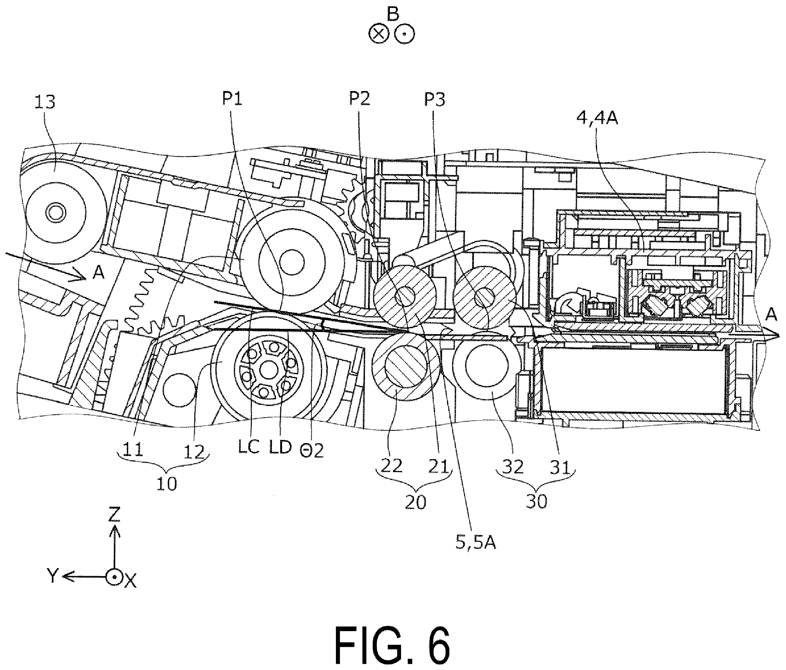

Next, an image reading device 1B according to a second embodiment will be described with reference to FIGS. 5 to 7. Here, FIG. 5 corresponds to FIG. 1 illustrating the image reading device 1A according to the first embodiment, and FIG. 6 corresponds to FIG. 2 illustrating the image reading device 1A according to the first embodiment. In addition, the image reading device 1B according to the present embodiment is similar to the image reading device 1A according to the first embodiment except for those described below, and hence, has the features similar to those of the image reading device 1A according to the first embodiment. Thus, in FIGS. 5 to 7, the same reference characters are attached to those common to the first embodiment described above, and detailed description thereof will not be repeated.

As with the image reading device 1A according to the first embodiment illustrated in FIG. 1, the image reading device 1B according to the present embodiment includes the feeding unit 10 including the feeding roller 11, and the separation roller 12 configured to nip, together with the feeding roller 11, the medium M to separate the medium M from each other, and the feeding unit 10 is configured to transport the medium M along the transport path 5 in the transport direction A, as illustrated in FIG. 5. In addition, the image reading device 1B includes the first transport roller pair 20 disposed downstream of the feeding unit 10 in the transport direction A, and configured to transport the medium M in the transport direction A while nipping the medium. Furthermore, the image reading device 1B includes the second transport roller pair 30 disposed downstream of the first transport roller pair 20 in the transport direction A, and configured to transport the medium M in the transport direction A. In addition, the image reading device 1B includes the reading unit 4 disposed downstream of the second transport roller pair 30 in the transport direction A, and configured to read an image on the medium M.

In addition, as with the image reading device 1A according to the first embodiment, the image reading device 1B according to the present embodiment is configured such that the feeding unit 10 transports the medium M in the transport direction A while nipping the medium with the nipping width L2 narrower than the width L1 of the medium M in the width direction B intersecting the transport direction A. Furthermore, the first transport roller pair 20 transports the medium M in the transport direction A while nipping the medium with the nipping width L3 wider than the nipping width L2 of the feeding unit 10 in the width direction B. The second transport roller pair 30 transports the medium M in the transport direction A with the nipping width L4 wider than the nipping width L3 of the first transport roller pair 20 in the width direction B using a plurality of roller pairs arranged in the width direction B.

However, unlike the image reading device 1A according to the first embodiment, the image reading device 1B according to the present embodiment is configured such that the first reading unit 4A and the second reading unit 4B are not opposed to each other, and a transport roller pair 6E is provided between the first reading unit 4A and the second reading unit 4B in the transport path 5, as illustrated in FIG. 5. Furthermore, the configuration of the straight path 5A of the transport path 5 and the configurations of the feeding unit 10 and the first transport roller pair 20 differ between the image reading device 1B according to the present embodiment and the image reading device 1A according to the first embodiment.

Specifically, in the image reading device 1B according to the present embodiment, the nipping position P1 at the feeding unit 10 is disposed higher than the nipping position P2 at the first transport roller pair 20, as illustrated in FIG. 6. With such a configuration, it is possible to favorably flatten the medium M in a state of having a letter-V shape before the medium reaches the reading unit 4, and it is possible to achieve a configuration in which the transport path 5 faces the lower side at or around the feeding unit 10, that is, it is possible to avoid a configuration in which the transport path 5 faces the upper side, which makes it possible to suppress an increase in the size of the device in the height direction.

Note that, in the configuration in which the nipping position P1 is disposed higher than the nipping position P2, it is preferable to employ a configuration in which the line LC coupling the nipping position P1 at the feeding unit 10 and the nipping position P2 at the first transport roller pair 20 forms an angle from 2° to 15° with respect to the horizontal line LD. With such a configuration, it is possible to favorably flatten the medium M in a state of having a letter-V shape before the medium reaches the reading unit 4 while suppressing the feeding failure. In particular, it is possible to favorably transport the medium M having high stiffness such as thick paper.

Here, description will be made of a reason why it is preferable to employ a configuration in which the line LC coupling the nipping position P1 and the nipping position P2 forms an angle from 2° to 15° with respect to the horizontal line LD. In Table 1 below, rating is made as to transportability (transportability for thick paper) in a case of using thick paper as the medium M and is also made as to whether or not, in a case of using a commercially available copy sheet as the medium M, the medium can be favorably flattened at or around the reading unit 4. In the rating, the "A" represents "acceptable" and the "B" represents "not acceptable". Determination is made on the basis of whether or not, for the transportability for thick paper, the thick paper can be transported without any trouble and whether or not, as for the deflection of the copy paper, the degree of flatness of the medium M falls within a predefined range at or around the reading unit 4. As shown in Table 1 below, when the line LC coupling the nipping position P1 and the nipping position P2 is less than 2° with respect to the horizontal line LD, the transportability for thick paper results in "not acceptable", and when the line LC coupling the nipping position P1 and the nipping position P2 exceeds 15° with respect to the horizontal line LD, the deflection of the copy sheet results in "not acceptable".

**[Table 1]**

| | Less than 2° | From 2° to 15° | More than 15° |
|---|---|---|---|
| Transportability for thick paper | A | A | B |
| Copy sheet deflection | B | A | A |

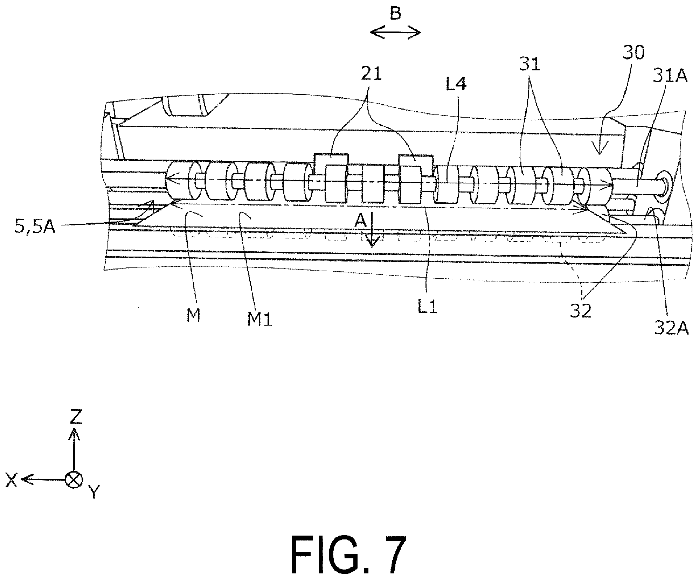

In addition, the image reading device 1B according to the present embodiment differs in the second transport roller pair 30 from the image reading device 1A according to the first embodiment. Specifically, more rollers having a width narrower than the upper-side roller 31 and the lower-side roller 32 of the image reading device 1A according to the first embodiment are arranged in the width direction B, as illustrated in FIG. 7. However, as with the second transport roller pair 30 of the image reading device 1A according to the first embodiment, the second transport roller pair 30 of the image reading device 1B according to the present embodiment is also configured such that the nipping width L4 of the second transport roller pair 30 is wider than the width L1 of the medium M in the width direction B.

The present disclosure is not limited to the embodiments, but by the scope of the following claims.

## Claims

1. An image reading device comprising:
a feeding unit including a feeding roller and a separation roller and configured to transport a medium along a transport path in a transport direction, the separation roller being configured to nip, together with the feeding roller, the medium to separate the medium from each other;
a first transport roller pair disposed downstream of the feeding unit in the transport direction, and configured to transport the medium in the transport direction while nipping the medium;
a second transport roller pair disposed downstream of the first transport roller pair in the transport direction, and configured to transport the medium in the transport direction; and
a reading unit disposed downstream of the second transport roller pair in the transport direction, and configured to read an image on the medium, wherein
the feeding unit is configured to transport the medium in the transport direction while nipping the medium with a nipping width narrower than a width of the medium in a width direction intersecting the transport direction,
the first transport roller pair is configured to transport the medium in the transport direction while nipping the medium with a nipping width wider than the nipping width of the feeding unit in the width direction, and
the second transport roller pair is configured to transport the medium in the transport direction with a nipping width wider than the nipping width of the first transport roller pair in the width direction using a plurality of roller pairs.

2. The image reading device according to claim 1, wherein
a nipping position at the feeding unit and a nipping position at the first transport roller pair are positioned in a horizontal direction,
the first transport roller pair includes an upper-side roller and a lower-side roller disposed in an up-down direction so as to face each other, and
a rotary shaft of the upper-side roller is disposed downstream of a rotary shaft of the lower-side roller in the transport direction.

3. The image reading device according to claim 2, wherein
the first transport roller pair is configured such that, when viewed from the width direction, a line coupling the rotary shaft of the upper-side roller and the rotary shaft of the lower-side roller forms an angle from 3° to 12° with respect to a line extending from the rotary shaft of the lower-side roller toward a vertically upward direction.

4. The image reading device according to claim 1, wherein
a nipping position at the feeding unit is positioned higher than a nipping position at the first transport roller pair.

5. The image reading device according to claim 4, wherein
a line coupling the nipping position at the feeding unit and the nipping position at the first transport roller pair forms an angle from 2° to 15° with respect to a horizontal line.

6. The image reading device according to claim 1, wherein
a nipping width of the second transport roller pair is wider than the width of the medium in the width direction.

7. The image reading device according to claim 6, wherein
the second transport roller pair is configured to at least nip a central portion of and both ends of the medium in the width direction.

8. The image reading device according to claim 1, wherein
the reading unit includes:
a first reading unit configured to read an image on a first surface of the medium; and
a second reading unit disposed so as to face the first reading unit, and configured to read an image on a second surface of the medium that is at an opposite side from the first surface.

## Patentansprüche

1. Bildlesevorrichtung, umfassend:
eine Zuführeinheit, die eine Zuführwalze und eine Trennwalze beinhaltet und dazu konfiguriert ist, ein Medium entlang eines Transportwegs in einer Transportrichtung zu transportieren, wobei die Trennwalze dazu konfiguriert ist, zusammen mit der Zuführwalze das Medium einzuklemmen, um das Medium voneinander zu trennen;
ein erstes Transportwalzenpaar, das der Zuführeinheit in der Transportrichtung nachgelagert ist und dazu konfiguriert ist, das Medium in der Transportrichtung zu transportieren, während das Medium eingeklemmt wird;
ein zweites Transportwalzenpaar, das dem ersten Transportwalzenpaar in der Transportrichtung nachgelagert ist und dazu konfiguriert ist, das Medium in der Transportrichtung zu transportieren; und
eine Leseeinheit, das dem zweiten Transportwalzenpaar in der Transportrichtung nachgelagert ist und dazu konfiguriert ist, ein Bild auf dem Medium zu lesen, wobei
die Zuführeinheit dazu konfiguriert ist, das Medium in der Transportrichtung zu transportieren, während das Medium mit einer Einklemmbreite, die schmaler als eine Breite des Mediums ist, in einer Breitenrichtung, die die Transportrichtung kreuzt, eingeklemmt wird,
das erste Transportwalzenpaar dazu konfiguriert ist, das Medium in der Transportrichtung zu transportieren, während das Medium mit einer Einklemmbreite, die breiter als die Einklemmbreite der Zuführeinheit ist, in der Breitenrichtung eingeklemmt wird, und
das zweite Transportwalzenpaar dazu konfiguriert ist, das Medium in der Transportrichtung mit einer Einklemmbreite, die breiter als die Einklemmbreite des ersten Transportwalzenpaars ist, in der Breitenrichtung unter Verwendung einer Vielzahl von Walzenpaaren zu transportieren.

2. Bildlesevorrichtung nach Anspruch 1, wobei
eine Einklemmposition an der Zuführeinheit und eine Einklemmposition an dem ersten Transportwalzenpaar in einer horizontalen Richtung positioniert sind,
das erste Transportwalzenpaar eine Walze der oberen Seite und eine Walze der unteren Seite beinhaltet, die in einer Auf/Ab-Richtung angeordnet sind, um einander zugewandt zu sein, und
eine Drehwelle der Walze der oberen Seite einer Drehwelle der Walze der unteren Seite in der Transportrichtung nachgelagert ist.

3. Bildlesevorrichtung nach Anspruch 2, wobei
das erste Transportwalzenpaar derart konfiguriert ist, dass eine Linie, die die Drehwelle der Walze der oberen Seite und die Drehwelle der Walze der unteren Seite koppelt, bei Betrachtung aus der Breitenrichtung einen Winkel von 3° bis 12° in Bezug auf eine Linie bildet, die sich von der Drehwelle der Walze der unteren Seite zu einer vertikal nach oben weisenden Richtung erstreckt.

4. Bildlesevorrichtung nach Anspruch 1, wobei eine Einklemmposition an der Zuführeinheit höher als eine Einklemmposition an dem ersten Transportwalzenpaar positioniert ist.

5. Bildlesevorrichtung nach Anspruch 4, wobei
eine Linie, die die Einklemmposition an der Zuführeinheit und die Einklemmposition an dem ersten Transportwalzenpaar koppelt, einen Winkel von 2° bis 15° in Bezug auf eine horizontale Linie bildet.

6. Bildlesevorrichtung nach Anspruch 1, wobei
eine Einklemmbreite des zweiten Transportwalzenpaars breiter als die Breite des Mediums in der Breitenrichtung ist.

7. Bildlesevorrichtung nach Anspruch 6, wobei
das zweite Transportwalzenpaar dazu konfiguriert ist, mindestens einen zentralen Abschnitt des Mediums und beide Enden dieses in der Breitenrichtung einzuklemmen.

8. Bildlesevorrichtung nach Anspruch 1, wobei
die Leseeinheit beinhaltet:
eine erste Leseeinheit, die dazu konfiguriert ist, ein Bild auf einer ersten Fläche des Mediums zu lesen; und
eine zweite Leseeinheit, die angeordnet ist, um der ersten Leseeinheit zugewandt zu sein, und dazu konfiguriert ist, ein Bild auf einer zweiten Fläche des Mediums zu lesen, die auf einer entgegengesetzten Seite zu der ersten Fläche ist.

## Revendications

1. Dispositif de lecture d'images comprenant :
une unité d'alimentation incluant un rouleau d'alimentation et un rouleau de séparation et configurée pour transporter un support le long d'un chemin de transport dans une direction de transport, le rouleau de séparation étant configuré pour, conjointement au rouleau d'alimentation, pincer le support afin de séparer les supports l'un de l'autre ;
une première paire de rouleaux de transport disposée en aval de l'unité d'alimentation dans la direction de transport, et configurée pour transporter le support dans la direction de transport tout en pinçant le support ;
une deuxième paire de rouleaux de transport disposée en aval de la première paire de rouleaux de transport dans la direction de transport, et configurée pour transporter le support dans la direction de transport ; et
une unité de lecture disposée en aval de la deuxième paire de rouleaux de transport dans la direction de transport, et configurée pour lire une image sur le support, dans lequel
l'unité d'alimentation est configurée pour transporter le support dans la direction de transport tout en pinçant le support avec une largeur de pincement inférieure à la largeur du support dans une direction de la largeur intersectant la direction de transport,
la première paire de rouleaux de transport est configurée pour transporter le support dans la direction de transport tout en pinçant le support avec une largeur de pincement supérieure à la largeur de pincement de l'unité d'alimentation dans la direction de la largeur, et
la deuxième paire de rouleaux de transport est configurée pour transporter le support dans la direction de transport avec une largeur de pincement supérieure à la largeur de pincement de la première paire de rouleaux de transport dans la direction de la largeur, en utilisant une pluralité de paires de rouleaux.

2. Dispositif de lecture d'images selon la revendication 1, dans lequel
une position de pincement dans l'unité d'alimentation et une position de pincement dans la première paire de rouleaux de transport sont positionnées en direction horizontale,
la première paire de rouleaux de transport inclut un rouleau supérieur et un rouleau inférieur disposés en direction haut-bas de manière à se faire face, et
un axe de rotation du rouleau supérieur est disposé en aval d'un axe de rotation du rouleau inférieur dans la direction de transport.

3. Dispositif de lecture d'images selon la revendication 2, dans lequel
la première paire de rouleaux de transport est configurée de telle sorte que, vue dans la direction de la largeur, une ligne reliant l'axe de rotation du rouleau supérieur et l'axe de rotation du rouleau inférieur forme un angle de 3° à 12° par rapport à une ligne s'étendant depuis l'axe de rotation du rouleau inférieur en direction verticale ascendante.

4. Dispositif de lecture d'images selon la revendication 1, dans lequel
la position de pincement dans l'unité d'alimentation est positionné plus haut que la position de pincement dans la première paire de rouleaux de transport.

5. Dispositif de lecture d'images selon la revendication 4, dans lequel
une ligne reliant la position de pincement dans l'unité d'alimentation et la position de pincement dans la première paire de rouleaux de transport forme un angle de 2° à 15° par rapport à une ligne horizontale.

6. Dispositif de lecture d'images selon la revendication 1, dans lequel
la largeur de pincement de la deuxième paire de rouleaux de transport est supérieure à la largeur du support dans la direction de la largeur.

7. Dispositif de lecture d'images selon la revendication 6, dans lequel
la deuxième paire de rouleaux de transport est configurée pour pincer au moins une portion centrale et les deux extrémités du support dans la direction de la largeur.

8. Dispositif de lecture d'images selon la revendication 1, dans lequel
l'unité de lecture inclut :
une première unité de lecture configurée pour lire une image sur une première surface du support ; et
une deuxième unité de lecture disposée de manière à faire face à la première unité de lecture, et configurée pour lire une image sur une deuxième surface du support qui se trouve du côté opposé à la première surface.
